# EUROPEAN PATENT SPECIFICATION

(11) **EP 0 235 959 B1**
(45) Date of publication and mention of the grant of the patent: **06.04.1994**
(21) Application number: 87300969.0
(22) Date of filing: 04.02.1987
(51) Int. Cl.: F16L 9/19

(54) **Method of producing a tube assembly**
Verfahren zur Herstellung einer Rohranordnung
Méthode pour réaliser un arrangement de tube

(30) Priority: 05.02.1986 GB 8602822; 15.11.1986 GB 8627353
(43) Date of publication of application: 09.09.1987
(73) Proprietor: BUNDY (TELFORD) LIMITED, Telford Shropshire TF7 4ET (GB)
(72) Inventor: Cooper, Anthony Gerald, Nr. Craven Arms Shropshire SY7 0HU (GB); Evans, Stephen James, Telford Shropshire PF4 3SF (GB); Harvey, David Charles, Shifnal Shropshire (GB)
(74) Representative: Watts, Peter Graham

(56) References cited:
- DE-U- 1 722 515
- GB-A- 1 160 508
- US-A- 3 822 903

## Description

The present invention relates to tube assemblies and in particular assemblies of a plurality of bent tubes, said tubes having a common path for at least a portion of their lengths.

Hitherto, where assemblies of bent tubes have been required, for example to provide brake and fuel lines for motor vehicles, each tube has been bent individually to the required configuration. Where such tubes are intended to follow the same path, they have been clipped individually relative to one another, typically in a flat configuration, in order to avoid abrasion of one tube against another. As a consequence, the assembly of tubes have been rather bulky and because of tolerance variations in individually bent tubes, it was sometimes difficult to achieve the required interposition of the tubes.

GB 1,160,508 discloses a method of manufacturing a flexible pipe bundle cable in which several copper pipes are stranded together, annealed and then coated with a plastics sheath. The flexibility of the pipe bundle allows it to be laid round relatively tight bends, the copper pipes are not however permanently deformed by bending. WO-82/03806 discloses a method of permanently bending assemblies of tubes. However the assembly of tubes may only be clamped together at one end prior to bending, although they may be clamped together along their common path during the bending operation, after the formation of each of a series of bends.

The present invention provides a method of producing permanently bent assemblies of tubes, in which the assembly of tubes may be clamped together along their common lengths in a single operation, prior to bending.

According to the present invention a method of producing a tube assembly including a plurality of tubes having a common path over at least a portion of their lengths, comprises;
a. assembling a plurality of straight lengths of tube in appropriate relationship relative to one another into an assembly of straight lengths of tube;
b. binding the assembly of tubes over the length that corresponds to the common path thereby clamping the tubes in juxtaposed relationship but slidable axially relative to one another; and
c. permanently deforming the bound portion of the assembled tubes to the required configuration of the common path by bending using bending equipment.

In the assembly formed in the manner described above the tubes will be held tightly together over their common path by the binding. The assembly will consequently be compact and will rigidly maintain its shape, thus avoiding the problem of abrasion of one tube against another. Moreover, as the tubes are bent together, all the tubes will accurately conform to the required configuration. In order to permit slippage between the tubes as they are bent, it is advantageous that they have relatively low friction surfaces. Coating of the tubes with, for example, plastics material or Terne metal may assist in this respect.

Where the tubes are required to follow separate paths beyond the portion following the common path, the ends of the tubes may be bent individually or in sub-assemblies which are bound together where appropriate, after the main bound portion of the bundle of tubes has been bent to the required configuration. As the bundle of tubes is tightly clamped together over its common path, conventional bending methods and equipment may be used.

Preferably the tubes will be bound together by wrapping continuously over their common path. A shrink wrapping material may be used for this purpose. This may conveniently be achieved by the use of heat shrinkable materials, preferably plastics for example irradiated Polyolefins. These will be applied to the appropriate length of the assembled tubes in the form of a sleeve, which upon application of heat will shrink to firmly encapsulate the tubes and clamp them in the appropriate relationship relative to one another. The sleeve may be of composite construction, having an internal layer of adhesive which will bond to the tubes to provide additional location thereof. Other methods of shrink wrapping may alternatively be used.

The straight lengths of tube which are initially assembled together should be cut to their appropriate lengths prior to assembly. The straight lengths of tube must be assembled in appropriate relationship relative to one another, with respect to both their relative longitudinal positions and their relative transverse positions. Any tube end forms and fittings that are required, may also be provided before assembly. If required the tubes may also be given identification marks near their ends, by any suitable method, so that individual tubes can be clearly recognised after assembly.

By using wrapping materials with good corrosion resistent properties, the wrapping may also serve to protect the tubes against corrosion. The wrapped portion of the assembly may be sealed by means of a suitable substance such as an epoxy resin, which may be injected into the gaps at the ends of the wrapped portion and allowed to harden to form a permanent plug between the tubes and between the tubes and the wrapping. When using heat shrink sleeving to wrap the bundle, a layer of hot melt adhesive, which melts at the temperatures used to shrink the sleeving may be provided around the end of the sleeving on its ID, so that when the sleeving is shrunk onto the bundle of tubes, the adhesive will melt and form a plug. A preformed core of hot melt adhesive may also be located between the tubes, so that upon melting it will fill the interstices between the tubes. Alternatively, each tube in the assembly may be located through a pair of soft elastomeric plugs which are positioned at the ends of the common path of the assembly, so that when that length of the assembly is wrapped, the plugs will be compressed and the elastomer will seal the gaps. Corrosion protection may be extended to individual portions of the assembly by wrapping the individual lengths of tube. These individual wrappings will preferably overlap with the wrapping over the common path of the assembly, so that they may also be sealed with respect thereto.

According to a further alternative, end sleeves of shrinkable material with integral fingers for the individual tubes or sub-assemblies of tubes may be applied at each end of the wrapped portion, these end sleeves being shrunk down onto the wrapped portion and individual tubes to provide the necessary seal therebetween. These end sleeves will preferably be applied before the ends of the tubes are bent to their individual paths. The fingers of the end sleeves may be extended or supplemented to provide complete coverage of the individual portions of the tubes.

While it is advantageous to bind the tubes together by wrapping continuously along the whole length of the common path, the tubes may alternatively be bound together at spaced intervals by means, for example, of plastic cable ties or clips, screw clips such as "Jubilee" clips or short lengths of heat shrink sleeving. Such assemblies will permit the bending of the common lengths of the tube together, but will not provide improved corrosion properties.

The invention is now described with reference to the accompanying drawings in which:-
Figure 1 shows a tube assembly formed in accordance with the present invention;
Figure 2 shows a section, on an enlarged scale, along the line II-II in Figure 1; and
Figure 3 shows an alternative tube assembly formed in accordance with the present invention.

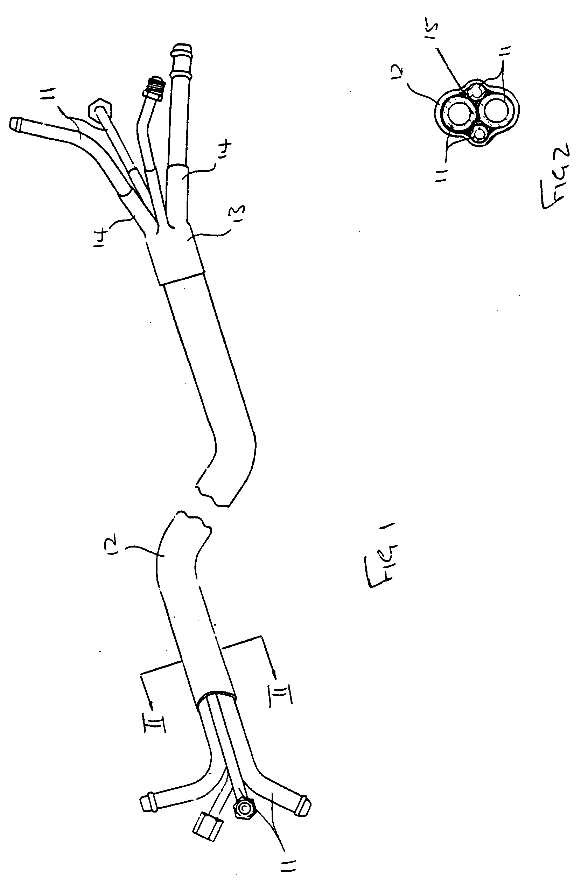

In the tube assembly illustrated in Figure 1, four lengths of tube 11 are bound along their lengths which form a common path, by means of a length of heat shrink sleeve 12. One end of the heat shrink sleeve 12 is sealed by means of a heat shrink end cap 13 having integral fingers 14 for each of the individual tubes 11. The other end is sealed with a hot melt adhesive plug 15 which fills the gaps between the tubes 11, and between the tubes 11 and the sleeve 12. The length of the assembly covered by the sleeve 12 is thereby sealed to provide corrosion protection of the lengths of tube 11 enclosed therein.

The heat shrink sleeve 12 and end cap 13 are placed over the tubes 11 before bending and are shrunk onto the tubes 11 to tightly clamp them together. Adhesive plug 15 is provided by a layer of hot melt adhesive on the internal diameter at the end of the sleeve 12 and by a core which is placed between the tubes 11. On heating the assembly to shrink the sleeve 12, the adhesive melts to fill the gaps and produce the plug 15. The tubes 11 are then bent, as one, over the common length defined by the sleeve 12 and individually along their portions extending beyond the sleeve 12.

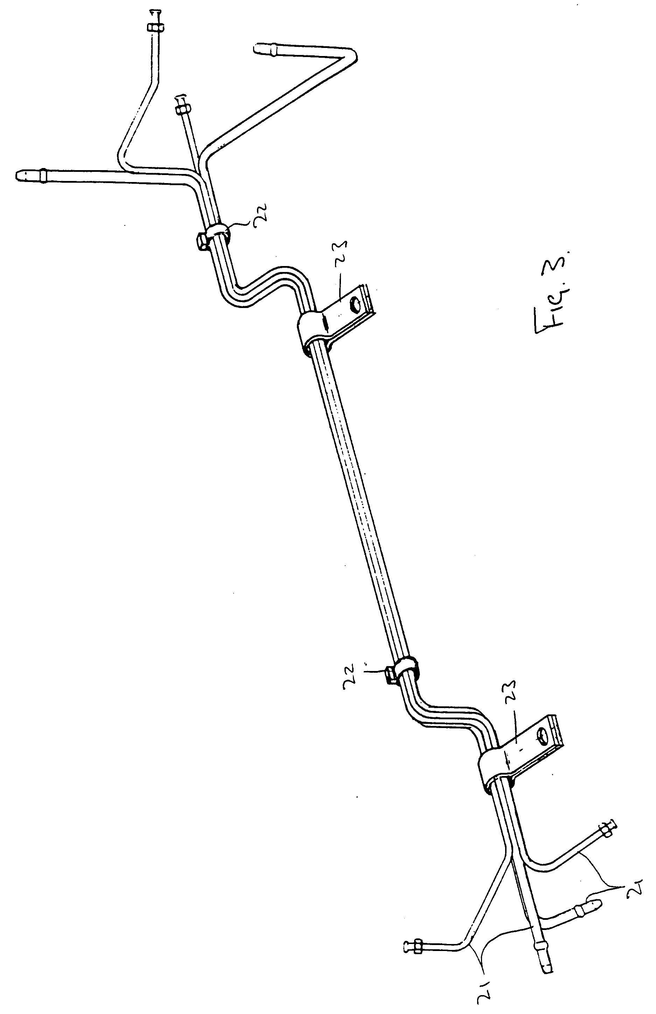

In the alternative embodiment illustrated in Figure 3, the lengths of tube 21 are bound tightly together before bending, by means of a series of plastic ratchet clips 22 positioned at spaced locations along the lengths of tubes 21 which follow a common path. The tubes 21 are then bent, as one, along the length defining the common path and individually at the ends. Additional clips 23 are provided for attachment of the tube assembly to, for example, a vehicle. The clips 23 may be applied prior to bending and serve to clamp the tubes 21 together or may be applied after the tubes have been bent.

## Claims

1. A method of producing a tube assembly including a plurality of tubes having a common path over at least a portion of their lengths, characterised by the following steps;
a. assembling a plurality of straight lengths (11; 21) of tube in appropriate relationship relative to one another into an assembly of straight lengths of tube;
b. binding the assembly of tubes (11; 21) over the length that corresponds to the common path thereby clamping the tubes (11; 21) in juxtaposed relationship but slidable axially relative to one another; and
c. permanently deforming the bound portion of the assembled tubes (11; 21) to the required configuration of the common path by bending using bending equipment.

2. A method according to Claim 1 characterised in that portions of the tubes (11; 21) or sub-assemblies of the tubes (11; 21), beyond the portion of the assembly which follows a common path, are subsequently bent individually to follow separate paths.

3. A method according to Claim 1 or 2 characterised in that the assembled tubes (11) are bound together by wrapping continuously along their common paths.

4. A method according to Claim 3 characterised in that the assembled tubes (11) are wrapped with a heat shrinkable material.

5. A method according to Claim 4 characterised in that a sleeve (12) of heat shrinkable material is applied to the appropriate length of the assembled tubes (11), the sleeve (12) being heated so that it shrinks to firmly encapsulate the assembled tubes (11) and clamp them in the appropriate relationship to one another.

6. A method according to any one of Claims 3 to 5 characterised in that the wrapped portion of the assembly is sealed.

7. A method according to Claim 6 characterised in that the gaps betwen the tubes (11) and between the tubes (11) and the wrapping are plugged by a suitable packing material.

8. A method according to claim 6 characterised in that end sleeves (13) of shrinkable material with integral fingers (14) for the individual tubes (11) or sub-assemblies of tubes (11) are applied to each end of the wrapped portion of the assembly and are shrunk down onto the wrapped portion and individual tubes (11) or sub-assemblies of tubes (11), to provide a seal therebetween.

9. A method according to Claim 1 or 2 characterised in that the assembled tubes (2) are bound together by binding at spaced intervals along their common paths.

## Patentansprüche

1. Verfahren zum Erzeugen einer Rohranordnung, die eine Vielzahl an Rohren beinhaltet, die einen gemeinsamen Weg über mindestens einen Teil ihrer Länge haben, gekennzeichnet durch die folgenden Schritte;
a) Zusammenfügen einer Vielzahl an geraden Rohren (11; 21) in einer geeigneten Beziehung relativ zueinander zu einer Anordnung von geraden Rohren;
b) Binden der Rohranordnung (11; 21) über die dem gemeinsamen Weg entsprechenden Länge, wodurch die Rohre (11; 21) aneinander aber axial verschiebbar relativ zueinander geklemmt werden; und
c) dauerhaftes Verformen des gebundenen Teiles der zusammengefügten Rohre (11; 21) in die erforderliche Form des gemeinsamen Weges durch Biegen unter Verwendung von einer Biegeeinrichtung.

2. Verfahren nach Anspruch 1, dadurch gekennzeichnet, daß Teile der Rohre (11; 21) oder Untergruppen der Rohre (11; 21), jenseits des Teiles der Anordnung, der einem gemeinsamen Weg folgt, nachfolgend einzeln gebogen werden, um getrennten Wegen zu folgen.

3. Verfahren nach Anspruch 1 oder 2, dadurch gekennzeichnet, daß die zusammengefügten Rohre (11) dadurch zusammengebunden werden, daß sie über ihren gemeinsamen Weg fortlaufend umwickelt werden.

4. Verfahren nach Anspruch 3, dadurch gekennzeichnet, daß die zusammengefügten Rohre (11) mit einem wärmeschrumpfbaren Material umwickelt werden.

5. Verfahren nach Anspruch 4, dadurch gekennzeichnet, daß ein Schlauch (12) aus einem wärmeschrumpfbaren Material auf die richtige Länge der zusammengefügten Rohre (11) aufgebracht wird, wobei der Schlauch (12) erhitzt wird, so daß er schrumpft, um die zusammengefügten Rohre (11) fest einzuschließen und sie in der richtigen gegenseitigen Lage zusammenzuklemmen.

6. Verfahren nach einem der Ansprüche 3 bis 5, dadurch gekennzeichnet, daß der umwickelte Teil der Anordnung abgedichtet wird.

7. Verfahren nach Anspruch 6, dadurch gekennzeichnet, daß die Spalte zwischen den Rohren (11) und zwischen den Rohren (11) und der Umwicklung mit einem geeigneten Packungsmaterial zugestopft werden.

8. Verfahren nach Anspruch 6, dadurch gekennzeichnet, daß Endschläuche (13) aus einem schrumpfbaren Material mit integrierten Fingern (14) für die einzelnen Rohre (11) oder Untergruppen von Rohren (11) auf jedes Ende des umwickelten Teils der Anordnung aufgebracht und auf den umwickelten Teil und die einzelnen Rohre (11) oder Untergruppen von Rohren (11) aufgeschrumpft werden, um eine Dichtung dazwischen zu schaffen.

9. Verfahren nach Anspruch 1 oder 2, dadurch gekennzeichnet, daß die zusammengefügen Rohre (2) dadurch zusammengebunden werden, daß sie in Abständen entlang ihres gemeinsamen Weges zusammengebunden werden.

## Revendications

1. Procédé de fabrication d'un ensemble de tubes comprenant une pluralité de tubes ayant un trajet commun sur au moins une partie de leur longueur, caractérisé par les phases consistant à :
a) assembler une pluralité de longueurs rectilignes (11 ; 21) de tubes dans des positions relatives appropriées les unes par rapport aux autres pour obtenir un ensemble de longueurs de tubes droites ;
b) lier l'ensemble de tubes (11 ; 21) sur la longueur qui correspond au trajet commun, en serrant ainsi les tubes (11 ; 21) dans des positions relatives juxtaposées mais de manière qu'ils puissent coulisser axialement les uns par rapport aux autres ;
c) déformer la partie liée des tubes assemblés (11 ; 21) par déformation permanente pour leur donner la configuration voulue du trajet commun par cintrage, en utilisant un équipement de cintrage.

2. Procédé selon la revendication 1, caractérisé en ce que des parties des tubes (11 ; 21) ou des sous-ensembles de tubes (11 ; 21) situées au-delà de la partie de l'ensemble qui suit un trajet commun sont ensuite cintrées individuellement pour suivre des trajets séparés.

3. Procédé selon la revendication 1 ou 2, caractérisé en ce que les tubes (11) sont liés ensemble par un enveloppement continu sur leurs trajets communs.

4. Procédé selon la revendication 3, caractérisé en ce que les tubes (11) assemblés sont enveloppés d'une matière thermorétractable.

5. Procédé selon la revendication 4, caractérisé en ce que la gaine (12) de matière thermorétractable est appliquée sur la longueur appropriée des tubes (11) assemblés, la gaine (12) étant chauffée de manière à se rétracter pour encapsuler solidement les tubes (11) et les serrer dans les positions relatives appropriées les uns par rapport aux autres.

6. Procédé selon une quelconque des revendications 3 à 5, caractérisé en ce que la partie enveloppée de l'ensemble est scellée.

7. Procédé selon la revendication 6, caractérisé en ce que les interstices entre les tubes (11) ainsi qu'entre les tubes (11) et l'enveloppement sont fermés par une matière de bourrage appropriée.

8. Procédé selon la revendication 6, caractérisé en ce que des gaines terminales (13) en matière rétractable, munis de doigt (14) venus de matière prévus pour les tubes individuels (11) ou les sous-ensembles de tubes (11) sont appliquées sur chaque extrémité de la partie enveloppée de l'ensemble et sont rétractées sur la partie enveloppée et sur les tubes individuels (11) ou les sous-ensembles de tubes (11) pour établir un joint étanche entre cette partie et ces tubes ou sous-ensembles.

9. Procédé selon la revendication 1 ou 2, caractérisé en ce que les tubes (2) assemblés sont liés ensemble par des ligatures à des intervalles espacés sur la longueur de leurs trajets communs.
